# EUROPÄISCHE PATENTSCHRIFT

(11) **EP 1 619 084 B1**
(45) Veröffentlichungstag und Bekanntmachung des Hinweises auf die Patenterteilung: **25.02.2009**
(21) Anmeldenummer: 05023377.4
(22) Anmeldetag: 24.11.2000
(51) Int. Cl.: B60R 21/01

(54) **Insassen-Rückhaltesystem**
Passenger restraint system
Système de retenue d'un passager

(30) Priorität: 01.12.1999 DE 19957802
(43) Veröffentlichungstag der Anmeldung: 25.01.2006
(62) Teilanmeldung aus: 00125268.3
(73) Patentinhaber: TRW Automotive GmbH, 73553 Alfdorf (DE)
(72) Erfinder: Claas, Uwe, 73579 Schechingen (DE); Kielwein, Thomas, 73569 Eschach (DE); Lüders, Michael, 75382 Althengstett (DE)
(74) Vertreter: Prinz & Partner

(56) Entgegenhaltungen:
- EP-A- 0 858 936
- EP-A- 0 934 855
- WO-A-96/30235
- GB-A- 2 337 127
- US-A- 5 626 359
- US-A- 5 655 619

## Beschreibung

Die Erfindung betrifft ein Insassen-Rückhaltesystem in Fahrzeugen mit wenigstens einem Gurtaufroller.

Moderne Gurtaufroller sind zusätzlich zu den üblichen gurtband- und/oder fahrzeugsensitiven Sperrfunktionen mit bedarfsweise vorgesehenen Zusatzfunktionen ausgestattet. Eine dieser Zusatzfunktionen ist die Sicherung von Lasten oder Kindersitzen durch einen Blockierzustand, der durch vollständigen Gurtbandabzug und anschließendes Wiederaufrollen des Gurtbandes eingeschaltet wird. Die Rückschaltung in den notfallsperrenden Zustand wird durch vollständiges Aufwickeln vom Gurtband erreicht. Eine andere Zusatzfunktion ist die Gurttrageerkennung, wozu die abgezogene Gurtbandlänge ermittelt wird. Ferner werden Gurtaufroller mit Gurtstraffern kombiniert, die bei einer Fahrzeugkollision die Gurtlose beseitigen.

Derartige Zusatzfunktionen eines Gurtaufrollers erfordern einen hohen Aufwand an mechanischen Bauteilen. Besonders aufwendig ist die Bereitstellung unterschiedlicher Gurtaufrollertypen für die jeweils angeforderten Zusatzfunktionen.

WO 96/30235 offenbart ein elektronisches Gurtsstraffungssystem mit einer Steuereinheit und einem Motor. Die Steuereinheit wertet Signale des Gurtschlosses, eines Radarsystems, und eines Kollisionswarnsystems aus und steuert den Motor für den Gurtaufroller an. Auch die Insassensitzposition und die Menge des abgewickelten Gurtbandes können berücksichtig werden. Je nach Signalauswertung wird der Motor zur Gurtstraffung unterschiedlich angesteuert.

Durch die Erfindung wird ein Insassen-Rückhaltesystem geschaffen, das im Bereich des Gurtaufrollers eine Vielzahl von sicherheits- und komfortrelevanten Zusatzfunktionen mit geringem Aufwand ermöglicht.

Der Gurtaufroller des erfindungsgemäßen Rückhaltesystems enthält einen Rahmen, eine in dem Rahmen drehbar gelagerte Gurtspule, einen Sperrmechanismus zur selektiven Blockierung der Gurtspule und einen elektrischen Drehantrieb für die Gurtspule. Zur Betätigung des Sperrmechanismus ist ein Aktor vorgesehen. Die Funktionen des Gurtaufrollers werden durch eine elektronische Steuereinheit gesteuert, die eine Eingangsschnittstelle und eine Ausgangsschnittstelle aufweist. Ein fahrzeugsensitiver Sensor ist an die Eingangsschnittstelle angeschlossen, und der Aktor ist an die Ausgangsschnittstelle angeschlossen. Mit diesem Grundkonzept sind die Sperrfunktionen und die Spannfunktionen des Gurtaufrollers leicht an die jeweils gestellten Forderungen anzupassen, weil lediglich Programmdaten und Parameterdaten anzupassen sind. Ferner können an die Eingangsschnittstelle der elektronischen Steuereinheit verschiedene Sensoren angeschlossen werden, deren Ausgangssignale bei der Ansteuerung des Sperrmechanismus und des Drehantriebs berücksichtigt werden. Ebenso können an die Ausgangsschnittstelle der elektronischen Steuereinheit weitere Aktoren oder Stellglieder und dergleichen angeschlossen werden, deren Funktionen in Abhängigkeit von den Sensorsignalen gesteuert werden, die über die Eingangsschnittstelle der elektronischen Steuereinheit abgefragt werden. Der Drehantrieb der Gurtspule, insbesondere ein Servomotor, kann nicht nur die Funktion der Aufrollfeder des herkömmlichen mechanischen Gurtaufrollers übernehmen, sondern auch eine Vorstraffung des Gurtbandes bei einem drohenden Fahrzeugaufprall oder eine Gurtbandanspannung in bestimmten Situationen gewährleisten. Insbesondere wird. durch die Erfindung ein Insassen-Rückhaltesystem in Fahrzeugen geschaffen, das wenigstens einen Gurtaufroller enthält, der einen Rahmen, eine in dem Rahmen drehbar gelagerte Gurtspule, einen Sperrmechanismus zur selektiven Blockierung der Gurtspule, einen Aktor zur Betätigung des Sperrmechanismus und einen an die Gurtspule gekoppelten elektrischen Drehantrieb aufweist. Eine elektronische Steuereinheit hat eine Eingangsschnittstelle für Sensorsignale und eine Ausgangsschnittstelle mit nachgeschalteten Treibern zur Ansteuerung des Aktors und des elektrischen Drehantriebs.

Die Sensorsignale umfassen:
- Insassenerkennungs-Signale,
- Fahrzeugzustands-Signale,
- Fahrzeugumgebungs-Signale;

Die Sensorsignale in der elektronischen Steuereinheit werden nach einem vorbestimmten Auslöseschema verknüpft zur Ausgabe von Ansteuersignalen an der Ausgangsschnittstelle, durch die selektiv:
- die Gurtspule zum Aufwickeln von Gurtband mit einem gesteuerten Drehmoment beaufschlagt wird;
- die Gurtspule zur Gurtbandanspannung mit einem gesteuerten Drehmoment angetrieben wird;
- die Gurtspule zur Gurtbandstraffung mit einem maximal verfügbaren Drehmoment angetrieben wird;
- der Aktor den Sperrmechanismus betätigt.

Einer der an die Eingangsschnittstelle angeschlossenen Sensoren liefert bei der bevorzugten Ausführungsform ein die Gurtspulendrehung repräsentierendes Inkrementalsignal, vorzugsweise in Kombination mit einem weiteren, die Drehrichtung anzeigenden Signal. Diese Signale werden von der elektronischen Steuereinheit durch aufwärts/abwärts- Zählung ausgewertet, um den absoluten Drehwinkel der Gurtspule und somit die abgezogene Gurtbandlänge zu bestimmen.

Bei dieser bevorzugten Ausführungsform hat der Gurtaufroller die folgende Funktionalität, wobei einzelne Funktionen auch nur bei Bedarf verwirklicht sein können:
- Kinder/Lastensicherung
- Gurttrageerkennung
- Fahrzeugsensitive Sperrung
- Aufrollfeder
- Komfortgetriebe
- Sperrung oder Gurtanspannung bei nichtverrigelter Sitzlehne
- Gurtbandsensitive Sperrung
- Gurtband-Vorstraffung
- Gurtbandanspannung.

Weitere Vorteile und Merkmale der Erfindung ergeben sich aus der folgenden Beschreibung mehrere Ausführungsformen und aus den Zeichnungen, auf die Bezug genommen wird.

In den Zeichnungen zeigen:
Figur 1 ein Blockdiagramm einer elektronischen Steuereinheit mit daran angeschlossenen Sensoren und Aktoren;
Figur 2 eine Perspektivansicht einer Synchronisationseinrichtung;
Figur 3 eine schematische Darstellung einer anderen Ausführungsform einer Synchronisationseinrichtung;
Figur 4 ein Ablaufdiadramm der Drehwinkelerkennung;
Figur 5 ein Ablaufdiagramm zur Synchronisation des Drehwinkel- Sensors;
Figur 6 ein Blockschema des Insassen-Rückhaltesystems; und
Figur 7 ein Flußdiagramm.

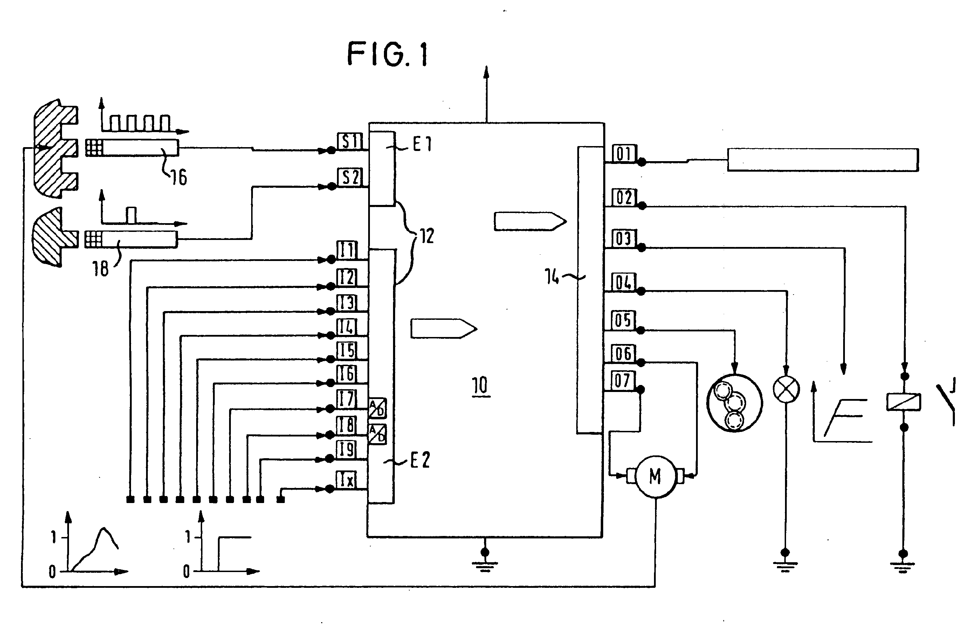

Für die Steuerung der Funktionen des erfindungsgemäßen Gurtaufroller ist eine in Figur 1 dargestellte elektronische Steuereinheit 10 vorgesehen. Diese Steuereinheit 10 ist mit einer Eingangsschnittstelle 12 versehen, die in der gewählten Darstellung in zwei Gruppen E1, E2 unterteilt ist. Diese Unterteilung hat jedoch nur symbolische Bedeutung. Ferner weist die Steuereinheit 10 eine Ausgangsschnittstelle 14 auf.

Die Gruppe E1 der Eingangsschnittstelle 12 enthält zwei Eingänge, die mit S1 und S2 bezeichnet sind. An den Eingang S1 ist ein Sensor 16 angeschlossen, der als Inkrementalgeber ausgebildet ist und bei Drehung der Gurtspule des Gurtaufrollers um einen vorbestimmten Drehwinkel einen Impuls abgibt. Die von diesem Sensor 16 abgegebenen Inkrementalsignale sind in bekannter Weise so konfiguriert, daß aus ihrer Aufeinanderfolge auf den Drehsinn der Gurtspule geschlossen werden kann. Beispielsweise besteht der Sensor 16 aus zwei einzelnen Inkrementalgebern, deren Signale zeitlich versetzt abgegeben werden. Der Sensor 16 kann ein optischer Sensor oder auch ein magnetischer Sensor sein.

An den mit S2 bezeichneten Eingang ist ein Sensor 18 angeschlossen, der bei einem bestimmten absoluten Drehwinkel der Gurtspule des Gurtaufrollers ein Synchronisationssignal abgibt. Dieses Synchronisationssignal wird beispielsweise immer dann erzeugt, wenn das Gurtband vollständig von der Gurtspule abgezogen ist. Die Synchronisation erfolgt dann in der Weise, daß ein in der Steuereinheit 10 enthaltener Inkrementalzähler, der durch die Inkrementalsignale des Sensors 16 angesteuert wird, auf Null gesetzt wird, entsprechend dem absoluten Drehwinkel 0° der Gurtspule.

Die Gruppe E2 der Eingangsschnittstelle 12 enthält die Signaleingänge I1 - Ix. Es können sowohl digitale als auch analoge Eingänge vorhanden sein.

An den Eingang I1 wird ein digitales Signal angelegt, das anzeigt, ob die Sitzlehne, an welcher der Gurtaufroller gegebenenfalls montiert ist, verriegelt ist oder nicht.

An den Eingang 12 wird ein digitales Signal angelegt, das anzeigt, ob der zu dem Gurtaufroller gehörende Sitz belegt ist.

An den Eingang I3 wird ein digitales oder auch analoges Signal angelegt, das repräsentativ für das Gewicht des Insassen auf dem zu den Gurtaufroller gehörenden Sitz ist.

An den Eingang I4 wird das vorzugsweise digitale Signal eines fahrzeugsensitiven Sensors angelegt.

An den Eingang 15 wird ein vorzugsweise ebenfalls digitales Signal eines Aufprallsensors angelegt.

An den Eingang I6 wird ein digitales Signal von einem Gurtschloß- Schalter angelegt.

An den Eingang I7 wird ein vorzugsweise analoges Sitzpositions- Signal angelegt.

An den Eingang I8 wird ein vorzugsweise ebenfalls analoges Sitzlehnen-Signal angelegt, das den Neigungswinkel der Sitzlehne angibt.

An den Eingang I9 wird ein digitales Signal von einem externen Sensorschalter angelegt.

Der Eingang Ix steht für weitere zu berücksichtigende Sensorsignale zur Verfügung.

Die Ausgangsschnittstelle 14 enthält die Ausgänge O1 bis O7.

An den Ausgang O1 ist ein Gurtstraffer, beispielsweise mit pyrotechnischem Antrieb, angeschlossen. Es kannn sich um einen Schloßstraffer, Endbeschlagstraffer oder auch um einen am Gurtaufroller angeordneten Rotationsstraffer handeln.

An den Ausgang O2 ist ein Elektromagnet angeschlossen, durch den ein Sperriegel aktivierbar ist. Bei aktiviertem Sperriegel ist die Drehung der Gurtspule im Rahmen lasttragend blockiert.

An den Ausgang O3 ist ein mehrstufiger Kraftbegrenzer angeschlossen. Das am Ausgang O3 ausgegebene Ansteuersignal stellt den Kraftbegrenzer auf das der jeweiligen Situation angemessene Kraftniveau ein.

An den Ausgang O4 ist eine Warneinrichtung angeschlossen, beispielsweise eine Warnlampe.

Von dem Ausgang O5 wird eine Kinder/Lastsicherung angesteuert. Diese bewirkt eine Verriegelung des Gurtaufrollers in Abzugsrichtung, nachdem das Gurtband vollständig abgezogen und wieder aufgerollt wurde; diese Verriegelung wirkt nicht in Aufrollrichtung.

Zwischen den Ausgängen O6 und O7 der Ausgangsschnittstelle 14 ist schließlich ein Elektromotor angeschlossen, der die Gurtspule des Gurtaufrollers antreibt. Wie in Figur 1 angedeutet ist, sind die Sensoren 16 und 18 in diesen Elektomotor integriert und beispielsweise auf einer Schaltungskarte aufgebaut, auf der die verschiedenen Elektronikbauteile einer Motorsteuerung angeordnet sind.

Die Belegung sowohl der Eingänge der Eingangsschnittstelle 12 als auch der Ausgänge der Ausgangsschnittstelle 14 erfolgt nach der von dem Gurtaufroller geforderten Funktionalität. Die Grundfunktionalität eines Gurtaufrollers besteht in der fahrzeugsensitiven Blockierung der Gurtspulendrehung. Für diese Funktion ist nur die Belegung des Eingangs I4 und des Ausgangs O2 erforderlich. Wird hingegen eine Kinder/Lastsicherung gefordert, muß der absolute Drehwinkel der Gurtspule(entsprechend der abgezogenen Gurtbandlänge) ermittelt werden. Dazu werden die Signale an den Eingängen S1 und S2 benötigt. Das Signal am Eingang I1 ist nur erforderlich, wenn der Gurtaufroller an einer umlegbaren Rückenlehne angebaut wird, wobei vorausgesetzt wird, daß die Gurtspule des Gurtaufrollers blockiert bleiben soll, solange die Rückenlehne des Fahrzeugsitzes nicht einwandfrei verrastet ist.

Die Verwendung eines Elektromotors zur Drehung der Gurtspule anstelle der herkömmlichen Aufrollerfeder eröffnet neue Aufrollerfunktionen, insbesondere eine Komfortfunktion, bei der in einem bestimmten Drehwinkelbereich der Gurtspule die Gurtkraft reduziert wird, eine Gurtbandanspannung in bestimmten Situationen, beispielsweise eine OOP-Stellung der Insassen, und eine Vorstraffung des Gurtbandes bei einem drohenden Fahrzeugaufprall oder in einem kritischen Fahrzustand.

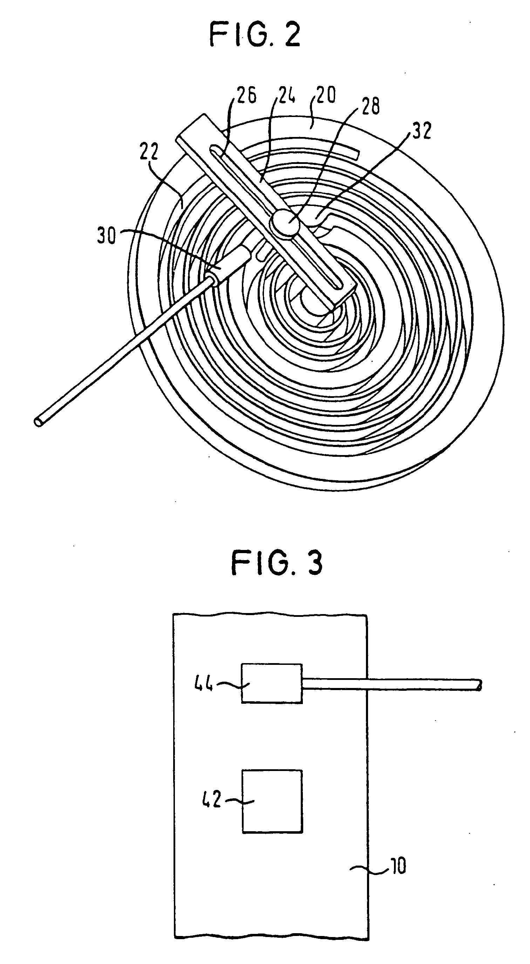

Für die Bestimmung des absoluten Drehwinkels der Gurtspule anhand der Inkrementalsignale des Sensors 16 wird das Synchronisationssignal des Sensors 18 benötigt. Die Figuren 2 und 3 zeigen zwei Ausführungsformen einer Synchronisationseinrichtung, die das Synchronisationssignal erzeugen kann.

Bei der in Figur 2 gezeigten Ausführungsform ist eine Scheibe 20, die eine Spiralnut 22 aufweist, drehfest mit der Gurtspule gekoppelt. In einer am Rahmen des Gurtaufrollers befestigten Führung 24 ist ein radialer Schlitz 26 angeordnet. In diesem radialen Schlitz 26 ist ein stiftförmiger Kurvenfolger 28 geführt, der gleichzeitig indie Spiralnut 22 eingreift. Ein Sensor 30 ist in Gegenüberlage zu dem Kurvenfolger 28 angeordnet, wenn dieser sich in einer bestimmten Radialstellung befindet, die in etwa dem vollständig abgewickelten Gurtband entspricht. Auf entsprechender Höhe weist die Spiralnut 22 eine Unstetigkeit 32 auf, die bei Drehung der Scheibe 20 zu einer verstärkten radialen Bewegungskomponente des Kurvenfolgers 28 führt und auf diese Weise ein ausgeprägtes Synchronisationssignal liefert.

Bei der in Figur 3 gezeigten Ausführungsform ist in das Gurtband 40 ein Permanentmagnet 42 eingewebt, der mit einem am Rahmen des Gurtaufrollers angebrachten Magnetsensor 44 zusammenwirkt. Beim Durchgang des Permanentmagneten 42 über dem Sensor 44 wird das Synchronisationssignal erzeugt.

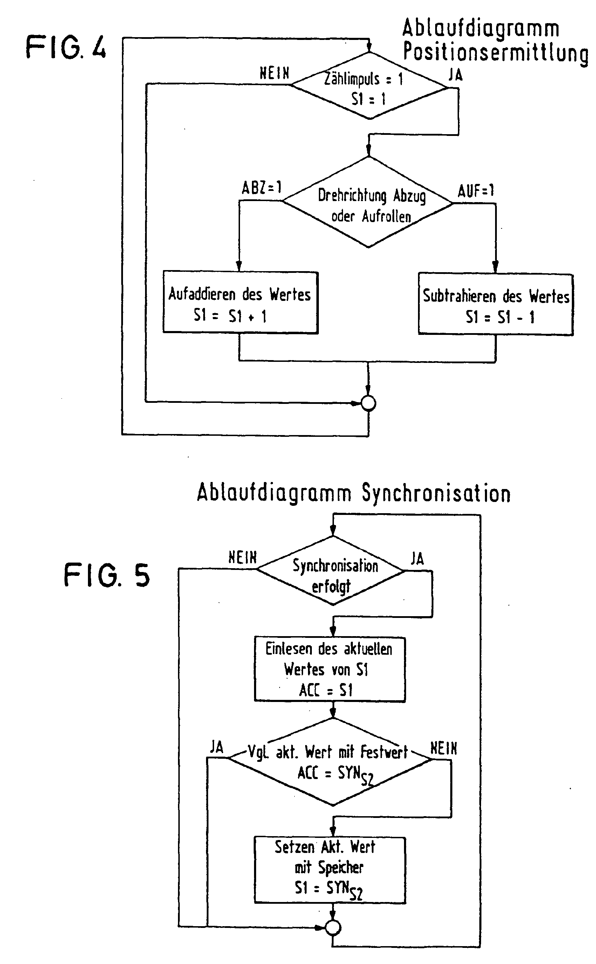

Die in den Figuren 4 und 5 gezeigten Ablaufdiagramme für die Bestimmung des absoluten Drehwinkels der Gurtspule (Figur 4) und zur Synchronisation (Figur 5) sind selbsterklärend.

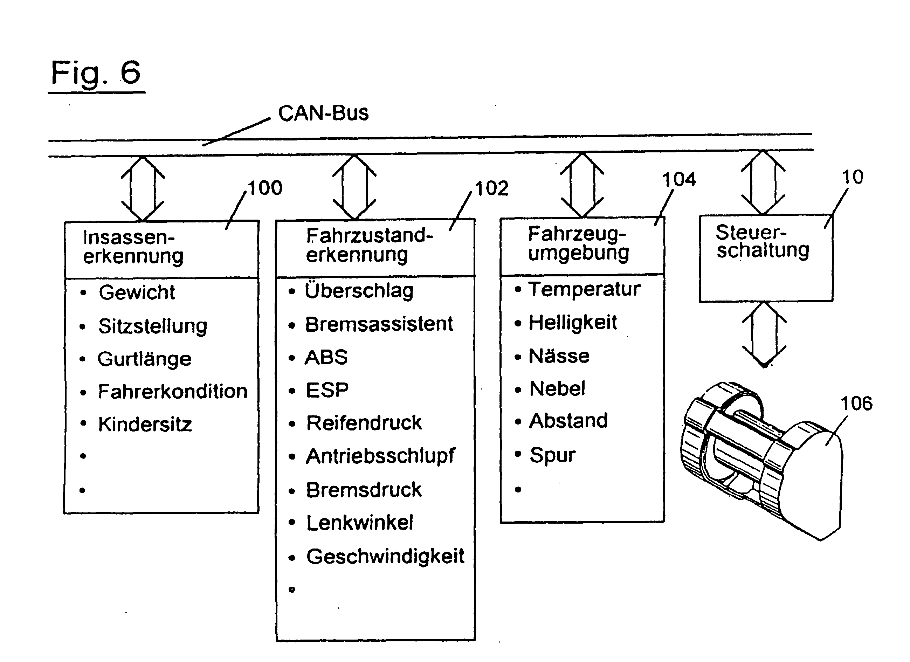

Gemäß dem in Figur 6 gezeigten Blockschaltbild machtdas Insassen-Rückhaltesystem von dem in modernen Fahrzeugen verfügbaren CAN-Bus Gebrauch. Eine Vielzahl von Sensoren ist an diesen Bus angekoppelt. Für die Funktionen des Rückhaltesystems sind drei Gruppen von Sensoren von Bedeutung:
a) In der mit der Bezugszahl 100 bezeichneten Gruppe von Sensoren sind diejenigen zusammengefaßt, mit denen eine Insassen-Erkennung ermöglicht wird. Dazu gehören insbesondere das Gewicht, die Sitzstellung(Längs- und Höhenposition), die ausgezogene Gurtbandlänge, die Fahrerkondition (biometrische Erfassung, insbesondere Einschlafneigung), Vorhandensein eines Kindersitzes.
b) In der mit 102 bezeichneten Gruppe sind Sensoren zusammengefaßt, die der Erkennung des Fahrzustandes dienen. Dazu gehören insbesondere Überschlag (Drehung um die Längsachse), Bremsassistent, ABS, ESP, Reifendruck, Antriebsschlupf, Bremsdruck, Lenkwinkel, Fahrzeuggeschwindigkeit.
c) Die in der mit 104 bezeichneten Gruppe enthaltenen Sensoren dienen der Erkennung der Fahrzeugumgebung. Dazu gehören insbesondere die Außentemperatur, die Helligkeit, Nässe, Nebel, Abstand des Fahrzeugs zu einem Hindernis, Spurverfolgung (Erkennung einer Abweichung von der Fahrspur).

Jede der Gruppen 100, 102, 104 wird bei Bedarf um weitere Sensoren ergänzt.

An den CAN-Bus ist ferner die Steuerschaltung 10 angeschlossen, die ihrerseits den mit 106 bezeichneten Gurtaufroller ansteuert.

Die von den verschiedenen Sensoren abgegebenen Signale werden nach einem im Programmspeicher der Steuerschaltung 10 abgelegten Algorithmus verarbeitet. Die jeweilige Konstellation der Sensorsignale und der zeitliche Ablauf ihres Auftretens entscheiden über die Auslösung einer der folgenden Aktionen:
1) Normaler Aufwickelbetrieb des Gurtaufrollers;
2) Gurtbandanspannung mit erhöhtem Aufrolldrehmoment (leichte Vorstraffung);
3) Gurtband-Vorstraffung mit maximal möglichem Aufroll-Drehmoment.

Davon unabhängig sind die darüber hinausgehenden Notfall- Funktionen, insbesondere die Aktivierung des Sperrmechanismus der Gurtspule, die Auslösung eines pyrotechnischen Gurtbandstraffers und die Aktivierung vo aufblasbaren Rückhalteeinrichtungen. In Abhängigkeit von den erfaßten Sensorsignalen wird darüber hinaus eine Konditionierung der Komponenten des Rückhaltesystems vorgenommen, insbesondere die Einstellung des Kraftniveaus eines Kraftbegrenzers am Gurtaufroller und die Bestimmung der Aktivierungsstufe der aufblasbaren Rückhalteeinrichtungen.

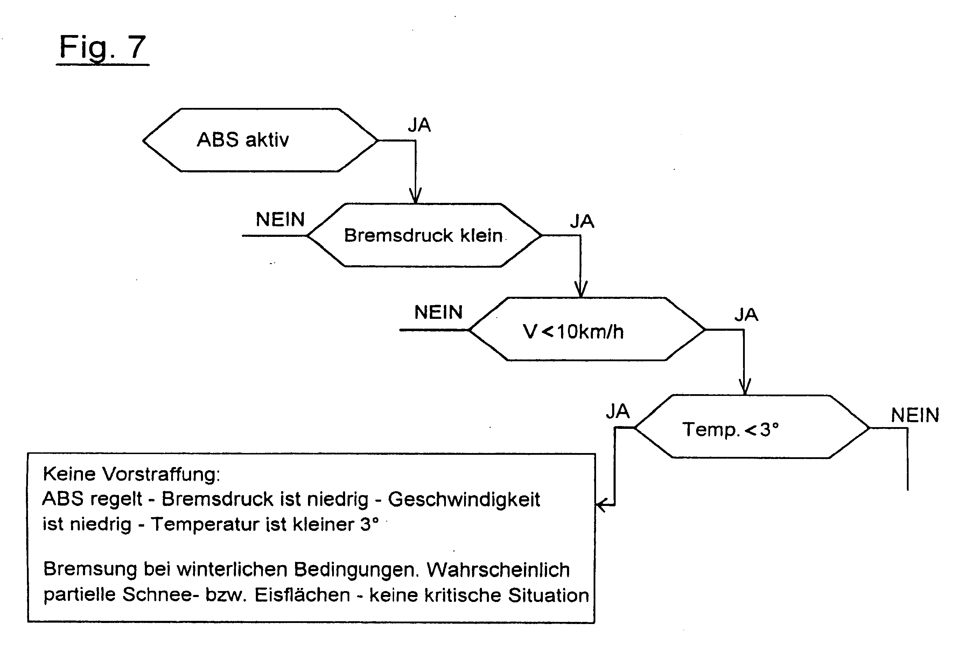

Figur 7 zeigt als Beispiel einen Ausschnitt des Algorithmus, der über die Auslösung der verschiedenen Aktionen entscheidet. Zu beachten ist hier die sequenzielle Abarbeitung von Parameterprüfungen in Abhängigkeit vom Ergebnis vorangegangener Überprüfungen.

In den folgenden Tabellen sind zahlreiche Konstellationen von Sensorsignalen, ihre Bewertung und die daraus folgenden Aktionen aufgelistet. Obwohl diese Tabellen beispielhaften Charakter haben, gehen aus ihnen einige Besonderheiten des erfindungsgemäßen Insassen- Rückhaltesystems hervor. Dazu gehören die Berücksichtigung des Reifendrucks, des Fahrzeugüberschlags (Roll over) und die OOP (Out Of Position)-Situation. Im letzteren Fall wird der betreffende Insasse durch eine nach einiger Zeit erfolgende Anspannung des Gurtbandes sanft und suggestiv angeregt, eine reguläre Sitzposition einzunehmen.

**Tabelle 1**

| | | **Ausführungsbeispiel** | **Signale** | **Bewertung** | **Bemerkung** | **Aktion** |
|---|---|---|---|---|---|---|
| | **Gewichtserkennung** | Matte im Sitz Sitzbefestigung | Sitz nicht belegt < 40 kg > 40 kg/< 100 kg > 100 kg | i.O. niedrig normal hoch | | gewichtsabhängig Konditionierung von Kraftbegrenzung und Airbag |
| | **Insassenposition** | Kamera Ultraschall Infrarot | In Position Out of Position | i.O. Vorsicht | Zeitabhängig | leichte Vorstraffung |
| | **Insassenkondition** | Einschlafsensor | Normal Einschlafneigung | i.O. Vorsicht | | leichte Vorstraffung |
| | **Gurttrageerkennung** | Gurtbandsensor Schloss-Schalter | Gurt angelegt Gurt nicht angelegt | i.O. kritisch | wenn Sitz belegt | Airbag max. Stufe |
| **Lenkung** | **Längsverstellung** | elektr. Lenkradverstellung | vorn hinten | Signale können zur besseren Bewertung der Insassenposition hinzugezogen werden, führen aber nur bei Widerspruch zu anderen Abfragen zu einer Aktion. Z.B. Gewicht > 100 kg, Sitz ganz vorn und ganz oben. | | |
| | **Höhenverstellung** | elektr. Lenkradverstellung | oben unten | | | |
| **Sitz** | **Sitzlängsverstellung** | elektr. Sitzverstellung | Vorn Mitte Hinten | | | |
| | **Sitzhöhenverstellung** | elektr. Sitzverstellung | Oben Mitte Unten | | | |
| | **Lehnenneigung** | elektr. Sitzverstellung | Steil Mitte Flach | | | |
| | **Kindersitzerkennung** | Schalter Isofix AKSE | ja nein | ja nein | | Airbag deaktiviert |
| | **Lehnenverriegelung** | Kontaktschalter | nicht verriegelt verriegelt | kritisch i.O. | wenn Sitz belegt | leichte Vorstraffung |
| | **Airbagabfrage** | Fehlerabfrage | deaktiviert/defekt i.O. | kritisch kritisch | bei Insassen bei Kindersitz | Airbag deaktiviert |

**Tabelle 2**

| | **Ausführungsbeispiel** | **Signale** | **Bewertung** | **Bemerkung** |
|---|---|---|---|---|
| **Bremsassistent** | vorhanden | Vollbremsung | Kritisch | |
| **Rollover** | Sensor | Fzg. Überschlag | Kritisch | |
| **Reifendruck** | Sensor | Reifendruck > X | Vorsicht | |
| | | Reifendruck < Y | Vorsicht | |
| | | Reifendruck < Z | Kritisch | |
| **Antriebsschlupfregelung** | vorhanden | System regelt | Vorsicht | |
| **ESP** | vorhanden | System regelt | Vorsicht | weitere Abfragen erforderlich |
| **Radar (vorn)** | Abstandsregelung | Abstandsunterschreitung um > X < Y | Vorsicht | |
| | | Abstandsunterschreitung um > Y | Kritisch | |
| **Radar (rundum)** | Precrash | Kollisionswahrscheinlichkeit > X < Y | Vorsicht | |
| | | Kollisionswahrscheinlichkeit > Y | Kritisch | |

**Tabelle 2a (ESP regelt)**

| | | | | |
|---|---|---|---|---|
| **Bremsdruck** | vorhanden | Niedrig | | |
| | | Mittel | | |
| | | Hoch | | |
| **ABS** | vorhanden | System regelt | Vorsicht | weitere Abfragen erforderlich |
| **Lenkwinkel** | vorhanden | klein | | |
| | | Gross | | |
| **Geschwindigkeit** | vorhanden | < 15 km/h | | |
| | | > 15 km/h, < 50 km/h | | |
| | | > 50 km/h | | |

**Tabelle 3**

| | **Ausführungsbeispiel** | **Signale** | **Bewertung** | **Bemerkung** |
|---|---|---|---|---|
| **Temperatur** | Aussenthermometer | T > 3° | i.O. | |
| | | T < 3° | kritisch | |
| **Nässe** | Regensensor | | | |
| | Scheibenwischer Aus | Trocken | i.O. | |
| | Scheibenwischer Intervall | Feucht | Vorsicht | |
| | Scheibenwischer Dauer Ein | Nass | kritisch | |
| **Nebel** | Nebelsensor | Sichtweite > 50 m, < 100 m | Vorsicht | |
| | | Sichtweite < 50 m | kritisch | |
| **Fahrbahnverfolgung** | Markierungserkennung | Fzg. mittig auf Fahrspur | i.O. | |
| | | Fzg. verlässt Fahrspur | Vorsicht | |
| **Lichtverhältnisse** | Autom. Scheinwerferschaltung | Taghell | i.O. | |
| | | Dämmerung | Vorsicht | |
| | | Nacht | Vorsicht | |

## Patentansprüche

1. Insassen-Rückhaltesystem in Fahrzeugen, mit wenigstens einem Gurtaufroller (106), der einen Rahmen, eine in dem Rahmen drehbar gelagerte Gurtspule, einen Sperrmechanismus zur selektiven Blockierung der Gurtspule, einen Aktor zur Betätigung des Sperrmechanismus und einen an die Gurtspule gekoppelten elektrischen Drehantrieb aufweist, und mit einer elektronischen Steuereinheit (10), die eine Eingangsschnittstelle (12) für Sensorsignale und eine Ausgangsschnittstelle (14) mit nachgeschalteten Treibern zur Ansteuerung des Aktors und des elektrischen Drehantriebs aufweist; wobei die Sensorsignale umfassen:
- Insassenerkennungs-Signale,
- Fahrzeugzustands-Signale,
- Fahrzeugumgebungs-Signale;
und wobei die Sensorsignale in der elektronischen Steuereinheit (10) nach einem vorbestimmten Auslöseschema verknüpft werden zur Ausgabe von Ansteuersignalen an der Ausgangsschnittstelle (14), durch die selektiv:
- die Gurtspule zum Aufwickeln von Gurtband (40) mit einem gesteuerten Drehmoment beaufschlagt wird;
- die Gurtspule zur Gurtbandanspannung mit einem gesteuerten Drehmoment angetrieben wird;
- die Gurtspule zur Gurtbandstraffung mit einem maximal verfügbaren Drehmoment angetrieben wird;
- der Aktor den Sperrmechanismus betätigt;
und mit einem der Gurtspule zugeordneten Drehwinkel-Inkrementalgeber, der an die Eingangsschnittstelle (12) angeschlossen ist und für jedes Drehwinkel-Inkrement der Gurtspule einen Inkrementalimpuls an die Eingangsschnittstelle (12) abgibt; bei welchem die Inkrementalimpulse eine Information über den Drehsinn der Gurtspule beinhalten und die elektronische Steuereinheit (10) aus dieser Information und den Inkrementalimpulsen den für die abgerollte Gurtbandlänge repräsentativen absoluten Drehwinkel der Gurtspule ermittelt; wobei die Steuereinheit (10) aus dem absoluten Drehwinkel der Gurtspule Ansteuersignale für den Aktor ableitet, um den Sperrmechanismus für eine Kinder- und Lasten-Sicherungsfunktion nach zumindest annähernd vollständigem Gurtbandabzug von der Gurtspule zu aktivieren, so daß nur noch das Aufrollen von Gurtband möglich ist, und erst nach zumindest annähernd vollständigem Aufrollen des Gurtbandes auf der Gurtspule wieder zu deaktivieren.

2. Insassen-Rückhaltesystem nach Anspruch 1, mit einem der Steuereinheit (10) zugeordneten Speichermodul, in dem wenigstens ein Teil der die Funktionalität der Steuereinheit (10) bestimmenden Programmdaten sowie der das Auslöseschema definierenden Parameterdaten gespeichert sind.

3. Insassen-Rückhaltesystem nach Anspruch 1 oder 2, bei dem die Steuereinheit (10) aus einer Folge von Inkrementalimpulsen die Drehbeschleunigung der Gurtspule zur gurtbandsensitiven Ansteuerung des Sperrmechanismus ableitet.

4. Insassen-Rückhaltesystem nach Anspruch 1, 2 oder 3, bei dem die Steuereinheit (10) aus dem absoluten Drehwinkel der Gurtspule ein Gurttrage-Erkennungssignal ableitet.

5. Insassen-Rückhaltesystem nach einem der Ansprüche 2 bis 4, bei dem die Abgabe bestimmter Ansteuersignale eine Funktion mehrerer gleichzeitig erfaßter Parameterdaten ist.

6. Insassen-Rückhaltesystem nach einem der Ansprüche 2 bis 4, bei dem die Abgabe bestimmter Ansteuersignale eine Funktion mehrerer gleichzeitig erfüllter und nicht erfüllter Kriterien ist, die durch die Parameterdaten dargestellt werden.

7. Insassen-Rückhaltesystem nach einem der Ansprüche 2 bis 4, bei dem die Abgabe bestimmter Ansteuersignale eine Funktion mehrerer in einer vorbestimmten Sequenz erfaßter Parameterdaten ist.

8. Insassen-Rückhaltesystem nach einem der Ansprüche 2 bis 4, bei dem die Abgabe eines Ansteuersignals bei Erfassung bestimmter Vorrang-Parameterdaten unabhängig von anderen gleichzeitig erfaßten Parameterdaten erzwungen wird.

9. Insassen-Rückhaltesystem nach einem der Ansprüche 2 bis 4, bei dem die Abgabe eines Ansteuersignals bei Erfassung bestimmter Vorrang-Parameterdaten unabhängig von anderen gleichzeitig erfaßten Parameterdaten unterdrückt wird.

10. Insassen-Rückhaltesystem nach einem der Ansprüche 2 bis 9, bei dem die Programmdaten einen Algorithmus definieren, bei dem Parameterprüfungen sequentiell und in Abhängigkeit vom Ergebnis vorangegangener Parameterprüfungen durchgeführt werden.

11. Insassen-Rückhaltesystem nach einem der vorstehenden Ansprüche, mit einem Gurtaufroller (106), der an einer umlegbaren, in aufrechter Stellung durch eine Verriegelungseinrichtung arretierbaren Rückenlehne eines Fahrzeugsitzes angeordnet ist und bei dem an die Eingangsschnittstelle (12) ein Sensor-Schalter angeschlossen ist, der den Zustand der Verriegelungseinrichtung signalisiert, wobei die Steuereinheit (10) ein Aktivierungssignal für den Aktor zur Betätigung des Sperrmechanismus dann abgibt, wenn eine nicht arretierte Rückenlehne signalisiert wird.

12. Insassen-Rückhaltesystem nach einem der vorstehenden Ansprüche, bei dem an der Ausgangsschnittstelle (14) wenigstens ein Indikatorsignal für eine weitere Komponente des Insassen-Rückhaltesystems, insbesondere aufblasbares Schutzkissen oder Kniefänger, verfügbar ist.

13. Insassen-Rückhaltesystem nach einem der Ansprüche 1 bis 12, bei dem die Steuereinheit (10) aus dem absoluten Drehwinkel der Gurtspule ein Indikatorsignal ableitet, das den Gurttragezustand anzeigt.

14. Insassen-Rückhaltesystem nach einem der Ansprüche 1 bis 13, bei dem die Steuereinheit (10) aus dem absoluten Drehwinkel der Gurtspule ein Indikatorsignal ableitet, das einen Zustand der Gefährdung durch eventuelle Aktivierung der weiteren Komponente des Insassen-Rückhaltesystems (OOP-Zustand) anzeigt.

15. Insassen-Rückhaltesystem nach einem der vorstehenden Ansprüche, bei dem die Insassenerkennungs-Signale durch mehrere der folgenden Sensoren (100) erzeugt werden:
- Insassengewicht-Sensor;
- Sitzstellung-Sensor;
- Gurtspulen-Drehwinkel-Sensor;
- Fahrerkonditions-Sensor;
- Kindersitzerkennungs-Sensor.

16. Insassen-Rückhaltesystem nach einem der vorstehenden Ansprüche, bei dem die Fahrzeugzustands-Signale durch mehrere der folgenden Sensoren (102) erzeugt werden:
- Überschlag-Sensor;
- Bremsassistent-Sensor;
- ABS-Sensor;
- ESP-Sensor;
- Reifendruck-Sensor;
- Antriebsschlupf-Sensor;
- Bremsdruck-Sensor;
- Lenkwinkel-Sensor;
- Geschwindigkeits-Sensor;
- Beschleunigungs-Sensor.

17. Insassen-Rückhaltesystem nach einem der vorstehenden Ansprüche, bei dem die Fahrzeugumgebungs-Signale durch mehrere der folgenden Sensoren (104) erzeugt werden:
- Temperatur-Sensor;
- Helligkeits-Sensor;
- Nebel-Sensor;
- Nässe-Sensor;
- Abstands-Sensor;
- Fahrbahnverfolgungs-Sensor.

18. Insassen-Rückhaltesystem nach einem der vorstehenden Ansprüche, bei dem die Gurtspule durch den elektrischen Drehantrieb mit einem gesteuerten Drehmoment zur Gurtanspannung beaufschlagt wird, wenn die erfaßten Insassenerkennungs-Signale eine OOP-Stellung des Insassen anzeigen.

19. Insassen-Rückhaltesystem nach Anspruch 18, bei dem das Drehmoment mit zunehmender Dauer des OOP-Zustands erhöht wird.

20. Insassen-Rückhaltesystem nach Anspruch 18, bei dem das Drehmoment bei andauerndem OOP-Zustand zyklisch erhöht und abgesenkt wird.

21. Insassen-Rückhaltesystem nach einem der vorstehenden Ansprüche, bei dem die Gurtkraft durch plastische Materialverformung eines im Kraftfluß angeordneten Bauteils auf einen variablen Kraftwert begrenzt wird, der durch die erfaßten Insassenerkennungs-Signale bestimmt wird.

22. Insassen-Rückhaltesystem nach einem der vorstehenden Ansprüche, mit mehreren Gurtaufrollern (106), die alle denselben mechanischen Grundaufbau, aber bedarfsweise unterschiedliche, durch in der Steuereinheit (10) gespeicherte Programm- und Parameterdaten definierte Funktionalität aufweisen.

## Claims

1. An occupant restraint system in a vehicle, comprising at least one belt retractor (106) which has a frame, a belt reel rotatably mounted in the frame, a locking mechanism for selectively blocking the belt reel, an actuator for actuating the locking mechanism, and an electric rotary drive coupled to the belt reel, and comprising an electronic control unit (10) including an input interface (12) for sensor signals and an output interface (14) having post-connected drivers for driving the actuator and the electric rotary drive; the sensor signals including:
- occupant detection signals,
- vehicle condition signals,
- vehicle environment signals;
and the sensor signals being combined in the electronic control unit (10) in accordance with a predetermined triggering scheme for the output of driving signals at the output interface (14), by which signals:
- the belt reel is selectively acted upon with a controlled torque for winding up of belt webbing (40);
- the belt reel is selectively driven with a controlled torque for tensioning the belt webbing;
- the belt reel is selectively driven with a maximum available torque for tightening the belt webbing;
- the actuator selectively actuates the locking mechanism;
and comprising a rotary angle incremental transmitter associated with the belt reel, the transmitter being connected to the input interface (12) and delivering an incremental pulse to the input interface (12) for each rotary angle increment of the belt reel; in which the incremental pulses contain information as to the sense of rotation of the belt reel and the electronic control unit (10) determines from this information and from the incremental pulses the absolute angle of rotation of the belt reel representative of the length of unwound belt webbing; the control unit (10) deriving driving signals for the actuator from the absolute angle of rotation of the belt reel to activate the locking mechanism for a child/load securing function when the belt webbing has been withdrawn at least almost fully from the belt reel, so that only retraction of belt webbing is still possible, and to deactivate the locking mechanism again only when the belt webbing has been retracted at least almost fully on the belt reel.

2. The occupant restraint system as set forth in claim 1, comprising a memory module associated with the control unit (10), in which the program data dictating the functionality of the control unit (10) and the parameter data defining the triggering scheme is stored at least in part.

3. The occupant restraint system as set forth in claim 1 or 2, in which the control unit (10) derives the angular acceleration of the belt reel from a sequence of incremental pulses, for the purpose of belt webbing-sensitive driving of the locking mechanism.

4. The occupant restraint system as set forth in claim 1, 2 or 3, in which the control unit (10) derives a buckled-up detection signal from the absolute angle of rotation of the belt reel.

5. The occupant restraint system as set forth in any of claims 2 to 4, in which the output of specific driving signals is a function of a plurality of parameter data which are simultaneously detected.

6. The occupant restraint system as set forth in any of claims 2 to 4, in which the output of specific driving signals is a function of a plurality of criteria which are fulfilled or not fulfilled at a moment, the criteria being represented by the parameter data.

7. The occupant restraint system as set forth in any of claims 2 to 4, in which the output of specific driving signals is a function of a plurality of parameter data detected in a predetermined sequence.

8. The occupant restraint system as set forth in any of claims 2 to 4, in which upon detection of specific precedent parameter data, the output of a driving signal is enforced independently of other parameter data detected simultaneously.

9. The occupant restraint system as set forth in any of claims 2 to 4, in which upon detection of specific precedent parameter data, the output of a driving signal is suppressed independently of other parameter data detected simultaneously.

10. The occupant restraint system as set forth in any of claims 2 to 9, in which the program data define an algorithm in which parameter checks are performed sequentially and dependent on the result of antecedent parameter checks.

11. The occupant restraint system as set forth in any of the preceding claims, comprising a belt retractor (106) which is arranged on a fold-down back rest of a vehicle seat lockable in the upright position by a latching device and in which a sensor switch is connected to the input interface (12) and signalizes the condition of the latching device, the control unit (10) delivering an activation signal for the actuator for actuating the locking mechanism when a non-locked back rest is signalized.

12. The occupant restraint system as set forth in any of the preceding claims, in which at the output interface (14) at least one indicator signal is available which is used for a further component of the occupant restraint system, in particular an inflatable protective cushion or a knee protector.

13. The occupant restraint system as set forth in any of claims 1 to 12, in which the control unit (10) derives from the absolute angle of rotation of the belt reel an indicator signal which indicates whether the belt is buckled up or not.

14. The occupant restraint system as set forth in any of claims 1 to 13, in which the control unit (10) derives from the absolute angle of rotation of the belt reel an indicator signal which indicates a condition of exposure to danger by a possible activation of the further component of the occupant restraint system (OOP condition).

15. The occupant restraint system as set forth in any of the preceding claims, in which the occupant detection signals are generated by a plurality of the following sensors (100):
- occupant weight sensor;
- seat position sensor;
- belt reel rotary angle sensor;
- driver's condition sensor;
- child seat detection sensor.

16. The occupant restraint system as set forth in any of the preceding claims, in which the vehicle condition signals are generated by a plurality of the following sensors (102):
- roll-over sensor;
- brake assist sensor;
- ABS sensor;
- ESP sensor;
- tire pressure sensor;
- traction control sensor;
- brake pressure sensor;
- steering angle sensor;
- speed sensor;
- acceleration sensor.

17. The occupant restraint system as set forth in any of the preceding claims, in which the vehicle environment signals are generated by a plurality of the following sensors (104):
- temperature sensor;
- brightness sensor;
- fog sensor;
- wetness sensor;
- distance sensor;
- lane tracking sensor.

18. The occupant restraint system as set forth in any of the preceding claims, in which for tensioning the belt the belt reel is acted upon with a controlled torque by the electric rotary drive when the occupant detection signals which are detected indicate an OOP position of the occupant.

19. The occupant restraint system as set forth in claim 18, in which the torque is increased with an increasing duration of the OOP condition.

20. The occupant restraint system as set forth in claim 18, in which the torque is cyclically increased and lowered in the case of a continuing OOP condition.

21. The occupant restraint system as set forth in any of the preceding claims, in which the belt force is limited by plastic deformation of material of a component arranged in the force flow to a variable force value determined by the occupant detection signals which are detected.

22. The occupant restraint system as set forth in any of the preceding claims, comprising a plurality of belt retractors (106) which all have the same basic mechanical structure, but where necessary have a varying functionality defined by program and parameter data stored in the control unit (10).

## Revendications

1. Système de retenue de passagers dans des véhicules, comportant au moins un enrouleur de ceinture (106) qui présente un cadre, une bobine de ceinture montée rotative dans le cadre, un mécanisme de blocage pour bloquer sélectivement la bobine de ceinture, un actionneur pour actionner le mécanisme de blocage et un entraînement rotatif électrique accouplé à la bobine de ceinture, et comportant une unité de commande (10) électronique qui présente une interface d'entrée (12) pour des signaux de capteurs et une interface de sortie (14) avec pilotes montés en aval pour piloter l'actionneur et l'entraînement rotatif électrique ; les signaux de capteurs comprenant :
- des signaux de reconnaissance de passager,
- des signaux d'état du véhicule,
- des signaux d'environnement du véhicule ;
et les signaux de capteurs étant associés dans l'unité de commande électronique (10) d'après un schéma de déclenchement prédéterminé pour émettre des signaux de pilotage au niveau de l'interface de sortie (14), par lesquels sélectivement :
- la bobine de ceinture est sollicitée par un couple de rotation commandé pour enrouler la sangle de ceinture (40) ;
- la bobine de ceinture est entraînée avec un couple de rotation commandé pour tendre la sangle de ceinture ;
- la bobine de ceinture est entraînée avec un couple de rotation maximum disponible pour tensionner la sangle de ceinture ;
- l'actionneur actionne le mécanisme de blocage ;
et comportant un capteur incrémentiel d'angle de rotation associé à la bobine de ceinture, qui est connecté à l'interface d'entrée (12) et qui fournit à l'interface d'entrée (12) une impulsion incrémentielle pour chaque incrément d'angle de rotation de la bobine de ceinture ; dans lequel les impulsions incrémentielles contiennent une information sur le sens de rotation de la bobine de ceinture et l'unité de commande électronique (10) détermine à partir de cette information et des impulsions incrémentielles l'angle de rotation absolu de la bobine de ceinture, qui est représentatif de la longueur déroulée de sangle de ceinture ; l'unité de commande (10) dérivant à partir de l'angle de rotation absolu de la bobine de ceinture des signaux de pilotage pour l'actionneur pour activer le mécanisme de blocage pour une fonction de sécurité enfants et de sécurité charges après retrait au moins approximativement complet de la sangle de ceinture hors de la bobine de ceinture, de sorte qu'il n'est plus possible que d'enrouler la sangle de ceinture, et pour le désactiver de nouveau seulement après l'enroulement au moins approximativement complet de la sangle de ceinture sur la bobine de ceinture.

2. Système de retenue de passagers selon la revendication 1, comportant un module de mémoire associé à l'unité de commande (10), dans lequel sont mémorisées au moins une partie des données de programmes déterminant la fonctionnalité de l'unité de commande (10) ainsi que les données de paramètres définissant le schéma de déclenchement.

3. Système de retenue de passagers selon la revendication 1 ou 2, dans lequel l'unité de commande (10) dérive à partir d'une succession d'impulsions incrémentielles l'accélération de rotation de la bobine de ceinture pour piloter le mécanisme de blocage en fonction de la sangle de ceinture.

4. Système de retenue de passagers selon la revendication 1, 2 ou 3, dans lequel l'unité de commande (10) dérive à partir de l'angle de rotation absolu de la bobine de ceinture un signal de reconnaissance du port de la ceinture.

5. Système de retenue de passagers selon l'une des revendications 2 à 4, dans lequel la fourniture de signaux de pilotage déterminés est une fonction de plusieurs données de paramètres simultanément détectées.

6. Système de retenue de passagers selon l'une des revendications 2 à 4, dans lequel la fourniture de signaux de pilotage déterminés est une fonction de plusieurs critères simultanément remplis et non remplis qui sont représentés par les données de paramètres.

7. Système de retenue de passagers selon l'une des revendications 2 à 4, dans lequel la fourniture de signaux de pilotage déterminés est une fonction de plusieurs données de paramètres détectées dans une séquence prédéterminée.

8. Système de retenue de passagers selon l'une des revendications 2 à 4, dans lequel la fourniture d'un signal de pilotage est forcée lors de la détection de données de paramètres prioritaires déterminées indépendamment d'autres données de paramètres simultanément détectées.

9. Système de retenue de passagers selon l'une des revendications 2 à 4, dans lequel la fourniture d'un signal de pilotage est bloquée lors de la détection de données de paramètres prioritaires déterminées indépendamment d'autres données de paramètres simultanément détectées.

10. Système de retenue de passagers selon l'une des revendications 2 à 9, dans lequel les données de programmes définissent un algorithme dans lequel des vérifications de paramètres sont effectuées de manière séquentielle et en fonction du résultat d'examen de paramètres précédents.

11. Système de retenue de passagers selon l'une des revendications précédentes, comportant un enrouleur de ceinture (106) qui est agencé sur un dossier d'un siège de véhicule, susceptible d'être rabattu et arrêté dans une position droite par un dispositif de verrouillage, et dans lequel à l'interface d'entrée (12) est connecté un commutateur à capteur qui signale l'état du dispositif de verrouillage, l'unité de commande (10) fournissant un signal d'activation pour l'actionneur pour actionner le mécanisme de blocage lorsqu'un dossier non arrêté est signalé.

12. Système de retenue de passagers selon l'une des revendications précédentes, dans lequel au niveau de l'interface de sortie (14) est disponible au moins un signal indicateur qui est utilisé pour un autre composant du système de retenue de passagers, en particulier pour un coussin de protection gonflable ou pour un protège-genoux.

13. Système de retenue de passagers selon l'une des revendications 1 à 12, dans lequel l'unité de commande (10) dérive à partir de l'angle de rotation absolu de la bobine de ceinture un signal indicateur qui indique l'état du port de la ceinture.

14. Système de retenue de passagers selon l'une des revendications 1 à 13, dans lequel l'unité de commande (10) dérive à partir de l'angle de rotation absolu de la bobine de ceinture un signal indicateur qui indique l'état de la mise en danger par activation éventuelle des autres composants du système de retenue de passagers (état POO).

15. Système de retenue de passagers selon l'une des revendications précédentes, dans lequel les signaux de reconnaissance de passagers sont engendrés par plusieurs des capteurs (100) suivants :
- capteur de poids de passagers;
- capteur de position assise ;
- capteur d'angle de rotation de bobine de ceinture ;
- capteur de condition de conducteur ;
- capteur de reconnaissance de siège pour enfant.

16. Système de retenue de passagers selon l'une des revendications précédentes, dans lequel les signaux d'état de véhicule sont engendrés par plusieurs des capteurs (102) suivants :
- capteur de capotage;
- capteur d'assistant de freinage ;
- capteur ABS
- capteur ESP ;
- capteur de pression de pneu ;
- capteur de patinage à l'accélération ;
- capteur de pression de frein ;
- capteur d'angle de direction ;
- capteur de vitesse ;
- capteur d'accélération.

17. Système de retenue de passagers selon l'une des revendications précédentes, dans lequel les signaux d'environnement de véhicule sont engendrés par plusieurs des capteurs (104) suivants :
- capteur de température ;
- capteur de luminosité ;
- capteur de brouillard ;
- capteur d'humidité ;
- capteur de distance ;
- capteur de poursuite de chaussée ;

18. Système de retenue de passagers selon l'une des revendications précédentes, dans lequel la bobine de ceinture est sollicitée par l'entraînement rotatif électrique avec un couple de rotation commandé pour tendre la ceinture lorsque les signaux de reconnaissance de passagers détectés indiquent une position POO du passager.

19. Système de retenue de passagers selon la revendication 18, dans lequel le couple de rotation est augmenté avec l'augmentation de la durée de l'état POO.

20. Système de retenue de passagers selon la revendication 18, dans lequel le couple de rotation est augmenté et diminué de manière cyclique en cas d'état POO persistant.

21. Système de retenue de passagers selon l'une des revendications précédentes, dans lequel la force de ceinture est limitée par déformation plastique de matériau d'un composant agencé dans le flux de force, à une valeur de force variable qui est déterminée par les signaux détectés de reconnaissance de passager.

22. Système de retenue de passagers selon l'une des revendications précédentes, comportant plusieurs enrouleurs de ceinture (106) qui présentent tous la même structure mécanique de base, mais selon les besoins, une fonctionnalité différente définie par des données de programmes et de paramètres mémorisées dans l'unité de commande (10).
